Europäisches Patentamt

(19) European Patent Office

Office européen des brevets

(11) Numéro de publication: **0 284 899**

**B1**

(12) **FASCICULE DE BREVET EUROPEEN**

(45) Date de publication du fascicule du brevet: **16.01.91**

(21) Numéro de dépôt: **88104208.9**

(22) Date de dépôt: **17.03.88**

(51) Int. Cl.⁵: **G 04 B 37/22, G 04 B 37/08**

(54) **Boîte de montre, ensemble destiné à la constituer et procédé pour assembler ledit ensemble.**

(30) Priorité: **23.03.87 CH 1097/87**
**15.10.87 CH 4035/87**

(43) Date de publication de la demande:
**05.10.88 Bulletin 88/40**

(45) Mention de la délivrance du brevet:
**16.01.91 Bulletin 91/03**

(84) Etats contractants désignés:
**DE FR GB**

(56) Documents cités:
CH-B- 340 193    DE-A-3 014 995
CH-B- 348 117    FR-A-1 363 424
CH-B- 387 550    FR-A-2 491 644
CH-B- 443 158    GB-A-2 100 891
CH-B- 506 826

PATENT ABSTRACTS OF JAPAN, vol. 7, no. 176
(P-214)1321r, 4 aou7t 1983, page 93 P 214; &
JP-A-58 80 586 (SUWA SEIKOSHA K.K.) 14-05-
1983

(73) Titulaire: **ETA SA Fabriques d'Ebauches**
**Schild-Rust-Strasse 17**
**CH-2540 Granges (CH)**

(72) Inventeur: **Meister, Leonhard**
**Hungersbühlweg 8**
**CH-2545 Selzach (CH)**

(74) Mandataire: **de Raemy, Jacques et al**
**ICB Ingénieurs Conseils en Brevets SA Passage**
**Max. Meuron 6**
**CH-2001 Neuchâtel (CH)**

Courier Press, Leamington Spa, England.

## Description

La présente invention est relative à un ensemble destiné à former une boîte de montre comportant une carrure dont au moins une portion périphérique est réalisée en matière plastique, une lunette et un joint d'étanchéité.

Elle est également relative à un procédé d'assemblage utilisant cet ensemble.

Le document JP-B-55-17958 décrit déjà une boîte de montre comportant un fond-carrure en matière plastique portant un fond discoïde fait d'une pièce avec une carrure proprement dite. Ce fond-carrure est surmoulé à l'intérieur d'une lunette métallique, cette dernière comportant des dents d'accrochage rendant le tout indémontable une fois réalisée l'injection du plastique. Pour assurer l'étanchéité entre le fond-carrure et la lunette, on dispose, avant injection, un joint d'étanchéité sur un épaulement de la lunette. Ce joint vient alors comprimé lors de l'injection du fond, ce qui assure l'étanchéité voulue.

Cette manière de procéder n'est pas satisfaisante pour au moins trois raisons. D'abord le joint risque d'être abîmé par la haute température de la matière liquide qui vient le comprimer. On pourrait alors choisir pour le joint une matière particulièrement résistante à la température, mais cette matière ne serait pas nécessairement la meilleure en ce qui concerne la fonction à assurer, c'est-à-dire l'étanchéité de la boîte. Ensuite le joint proposé, n'entourant que deux épaulements internes de la lunette, n'est pas suffisamment localisé ou guidé ce qui peut provoquer son déplacement, voire son déchirement, au moment de l'injection de la matière plastique. Enfin, le procédé de surmoulage, si précis que soit réalisé le moule, laisse des coulées sur les parties qui ne doivent pas être recouvertes ici la partie visible de la lunette ce qui nécessite un nettoyage ou ébavurage subséquent, autant d'opérations qu'on peut considérer comme coûteuses.

Bien que concernant la fixation étanche d'une glace en verre organique sur une boîte de montre, on pourrait utiliser, pour assembler une lunette à une carrure, le procédé proposé par la demande de brevet FR-A-2 491 644. Cette demande propose de munir la lunette d'une gorge tournée vers l'intérieur de la lunette. La glace est mise en appui sur un épaulement de cette lunette et on applique un poinçon chauffé de forme annulaire sur la périphérie de la glace pour déformer plastiquement celle-ci et faire pénétrer ainsi une partie du matériau plastique à l'intérieur de la gorge ménagée dans la lunette. Conjointement à cela, on comprimé un joint d'étanchéité entre la lunette et la glace. Un tel procédé permet certes d'obtenir une fixation étanche de la glace en s'affranchissant de tout organe mécanique de fixation ou de tout emploi de colle, mais il donne des résultats peu satisfaisants du point de vue esthétique. En effet la déformation due à l'application du poinçon annulaire se produit sur la face avant de la glace. En outre ces techniques de fixation de la glace mettent en jeu des forces mécaniques non négligeables pour obtenir la déformation du matériau. Ces forces induisent dans le produit final des tensions internes qui altèrent les qualités de vieillissement de la boîte munie de son verre.

Le brevet FR-A-1 363 424 décrit un boîtier en matière thermoplastique renforcé par incorporation d'une armature rigide, incorporation qui est réalisée au cours d'une opération de moulage par injection. A cet effet on introduit une frette en forme de lunette dans le moule d'injection. Cette frette est munie d'un évidement central dans lequel la matière plastique pénètre. Cependant, rien dans la description citée ne suggère un assemblage par ultrason de la lunette sur le boîtier, ni ne décrit un ensemble préparé à cet effet, comme c'est le cas dans la présente invention.

Un but de l'invention est de fournir un ensemble destiné à former une boîte de montre étanche qui soit fiable et peu coûteuse, ce but étant atteint par l'ensemble défini en revendication 1.

Un autre but de l'invention est de fournir un procédé d'assemblage de l'ensemble défini ci-dessus, procédé faisant l'objet de la revendication 4.

L'invention va être expliquée maintenant dans la description qui va suivre, donnée à titre d'exemple, en s'aidant du dessin qui l'illustre et dans lequel:

La figure 1 est une coupe partielle dans une boîte de monte assemblée selon un premier mode d'exécution de l'invention,

La figure 2 est une coupe partielle dans une boîte de montre selon l'invention avant assemblage des éléments la constituant,

La figure 3 est un agrandissement de ce qui est montré dans le cercle III de la figure 2,

La figure 4 est une reprise de la figure 1 montrant de surcroît la montre complètement montée,

La figure 5 est une coupe partielle dans une boîte de montre assemblée selon un second mode d'exécution de l'invention,

La figure 6 est une vue de dessus du bandage en matière plastique équipant la carrure montrée en figure 5 et

La figure 7 est une coupe selon la ligne VII-VII de la figure 6.

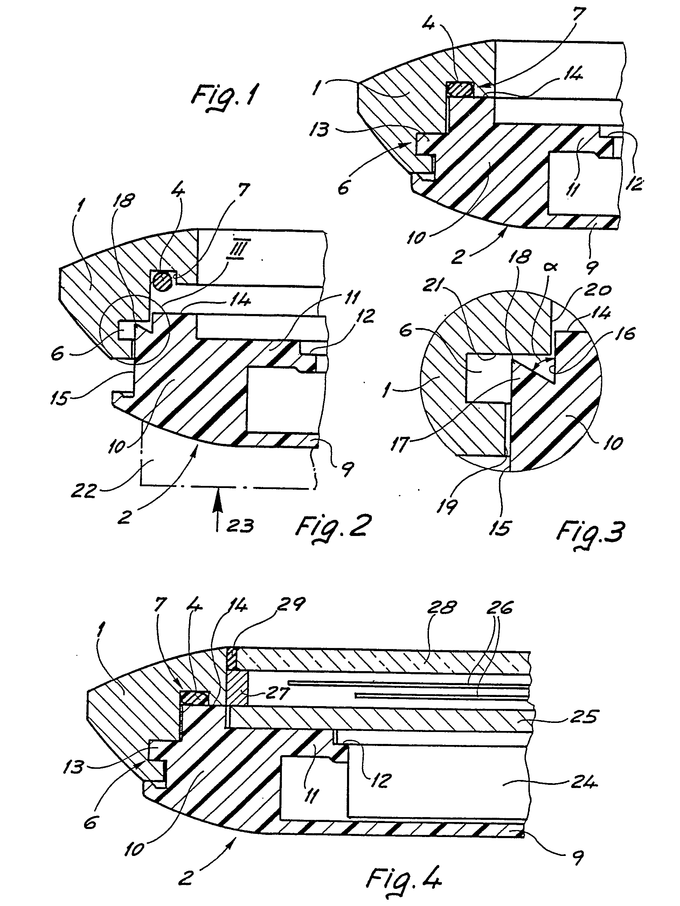

La figure 1 présente une boîte de montre assemblée selon un premier mode d'exécution de l'invention. Elle comprend essentiellement un fond-carrure 2 fait en matière plastique, une lunette métallique 1 et un joint d'étanchéité 4.

Le fond-carrure, fait d'une pièce, comprend une première partie, discoïde, formant la partie fond 9 et une seconde partie, annulaire, formant la partie carrure 10. Ce fond-carrure est du type monocoque où le mouvement est monté par le haut de la carrure 10. Cette carrure est équipée d'un cercle d'agrandissement 11 et d'appuis 12 pour supporter le mouvement. On peut pratiquer dans le fond 9 une ouverture (non représentée au dessin) pour procéder au changement de pile. Cette ouverture sera alors obturée par un couvercle. Le fond-carrure monocoque présente l'avantage de simplifier le montage de la montre sur machines automatiques de transfert. En effet, toutes les opérations de chargement ont lieu d'un même côté, le haut de la montre, et il n'est pas nécessaire de retourner la pièce pour l'équiper de ses composants constitutifs. Ce mode d'exécution présente aussi l'avantage de proposer un fond qui prend peu de place en épaisseur.

Réaliser le fond-carrure en matière plastique présente aussi le grand avantage de proposer une pièce bien meilleur marché que si ce fond-carrure était réalisé en acier. En effet cette pièce, par la complication qu'elle présente et par la précision avec laquelle elle doit être exécutée, est chère lorsqu'elle est faite en métal car elle exige des usinages nombreux et coûteux qui doivent être faits sur chaque pièce prise individuellement. Avec la matière plastique, complications et précision sont reportées sur le moule d'injection qui permettra de réaliser un grand nombre de pièces avec le fini désiré et sans opérations de reprise après injection. Le fait que le cercle d'agrandissement peut être moulé en même temps que le fond-carrure présente aussi un avantage évident puisqu'une pièce supplémentaire peut être évitée. On notera aussi que des phénomènes d'allergie, provoquant l'irritation de la peau par un fond en acier, ne se présenteront plus avec un fond en matière plastique.

Il n'en reste pas moins qu'un fond-carrure en matière plastique ne présente pas que des avantages ne serait-ce que par l'aspect esthétique médiocre de ses parties apparentes (bord de carrure et lunette). Ceci donne à la montre une impression de bon marché qu'il serait souhaitable d'éviter surtout pour une montre de milieu de gamme. D'autre part, on comprendra que ces parties apparentes sont très sollicitées par les contraintes mécaniques extérieures qui les rendent très sensibles aux rayures, d'où dégradation très rapide de l'aspect esthétique. Pour éviter cela, la montre proposée ici comporte une lunette métallique 1 recouvrant la partie carrure 10 et s'étendant sur au moins une partie de la tranche extérieure de ladite partie carrure. Cette lunette peut être en acier recouverte ou non d'un revêtement décoratif (matériaux durs, dorage, etc.).

Pour assembler le fond-carrure à la lunette plusieurs solutions peuvent être envisagées notamment celles qui ont été discutées à propos des documents cités plus haut, mais qui ne conviennent pas pour les raisons évoquées. On pourrait aussi utiliser une fermeture classique ou à cran du genre de celle décrite dans le document CH-A-230 526 où le fond est muni sur son pourtour d'un rebord possédant des baguettes d'accrochage coopérant avec des gorges pratiquées à l'intérieur de la carrure et ceci de telle manière que le fond soit maintenu dans un état de tension forcée et tende à écraser un joint d'étanchéité disposé entre le fond et la carrure. Cette dernière manière de faire n'est pas satisfaisante dans le cas où le fond est en matière plastique. On constate en effet que l'étanchéité n'est pas garantie, car l'ancrage peut présenter des forces irrégulières sur le joint ce qui conduit à un pincement de ce joint qui n'est pas constant sur tout son pourtour. D'autre part les gorges portées par la carrure métallique peuvent présenter des arêtes coupantes susceptibles d'endommager les baguettes d'accrochage faites en matière plastique.

Si l'on se reporte à nouveau à la figure 1, les moyens d'assemblage étanches du fond-carrure 2 et de la lunette 1 comprennent un premier logement annulaire 6 s'étendant radialement dans la lunette 1 et à l'intérieur duquel se trouve logé une protubérance annulaire 13 faite d'une pièce avec le fond-carrure 2. Grâce à la forme donnée au logement 6 et à la protubérance 13 qui s'y trouve logée, le fond-carrure 2 est inséparable de la lunette 1. Les moyens d'assemblage comportent encore un second logement annulaire 7 qui est défini conjointement par le fond-carrure et la lunette et un joint d'étanchéité 4 occupant ce second logement. Ce joint rend étanche la boîte aux liquides qui pourraient s'introduire entre la carrure 10 et la lunette 2, puis pénétrer à l'intérieur de la montre dans la région du cadran.

La figure 1 montre en particulier que le second logement annulaire 7 est situé entre la lunette 2 et le haut 14 de la partie carrure 10 et est formé par une gorge pratiquée dans la lunette 2, gorge fermée par le haut 14 de la partie carrure 10. Sans qu'il soit nécessaire de le représenter par une figure, on comprendra aisément, que c'est dans le haut 14 de la partie carrure 10 que pourrait se trouver la gorge, cette dernière étant fermée alors par un bord supérieur plat présenté par la lunette.

Le fond-carrure est réalisé donc en matière plastique. On dispose alors de tout un éventail de matières susceptibles de convenir à cette fabrication. On pourrait utiliser un matériau choisi dans le groupe comprenant l'acryl butadiène styrène (ABS), l'acryl styréne acryl-ester (ASA) et le styrène acryl nitrile (SAN). Ce pourrait être aussi un polyamide chargé de billes ou de fibres de verre.

La boîte qui vient d'être décrite est parfaitement étanche et présente une excellente fiabilité. En effet l'accrochage du fond-carrure à la lunette étant indémontable, le joint d'étanchéité reste comprimé dans son logement d'une façon constante quelles que soient les contraintes qui pourraient s'exercer sur la boîte comme des chocs ou des variations de température par exemple. En plus de cela elle est bon marché, tout en assurant des tolérances dimensionnelles serrées et bien reproductibles comme cela a déjà été mentionné ci-dessus.

La boîte de montre objet de l'invention est réalisée à partir d'un ensemble comportant un fond-carrure 2, une lunette 1 et un joint 4 qui se présentent, avart assemblage, de la façon qui va être décrite maintenant, les différents composants se présentant comme cela est illustré sur les figures 2 et 3, la figure 3 étant un agrandissement de ce qui est montré dans le cercle III de la figure 2.

Le pourtour extérieur de la partie carrure 10 du fond-carrure 2 présente une structure en escalier qui comprend une première paroi inférieure 15, une seconde paroi supérieure 16 et une marche biseautée 17 formant un angle aigu α avec la seconde paroi 16, cette marche présentant ainsi une arête 18 en forme de pointe. La lunette 1 comporte des premier 19 et second 20 flancs intérieurs adaptés respectivement pour épouser la forme des première et seconde parois de la partie carrure. Le premier logement 6 pratiqué dans la lunette 1, déjà décrit plus haut, est situé entre les flancs 19 et 20. Contre une face horizontale 21 du logement 6 vient s'appuyer l'arête 18 en forme de pointe présentée par la tranche de la partie carrure 10, quand le fond carrure 2 est introduit dans la lunette 1. L'ensemble défini par les figures 2 et 3 comporte encore le joint d'étanchéité 4 disposé dans le second logement 7 de la lunette 1.

La marche biseautée 17 peut être disposée tout autour de la partie carrure 10. Si le mouvement introduit dans la montre possède une tige de mise à l'heure, on pourra interrompre la marche biseautée 17 au voisinage de cette tige pour laisser passer un canon faisant partie intégrante du fond-carrure 2, ledit canon recevant ladite tige. De même la marche biseautée 17 pourrait être discontinue et présenter plusieurs segments disposés annulairement autour de la tranche de la carrure. On pourrait aussi imaginer, sans s'écarter pour autant de la présente invention, que le premier logement ne soit pas continu, mais disposé en plusieurs saignées pratiquées dans la lunette, chacune des saignées recevant un segment biseauté 17. Cette façon de faire pourrait servir à positionner angulairement le fond-carrure 2 par rapport à la lunette 1.

Reste à expliquer maintenant comment on procède pour assembler la boîte de montre selon l'invention.

On commence par introduire le fond-carrure 2 dans la lunette 1 jusqu'à ce que l'arête 18 en forme de pointe vienne buter contre la face 21 du premier logement 6 de la lunette 1 (voir cette position de départ sur les figures 2 et 3) En faisant reposer la lunette 1 sur un point d'appui, on exerce ensuite sur le fond-carrure 2 une pression au moyen d'une sonotrode 22 fournissant des vibrations mécaniques à fréquence élevée et cela dans la direction de la flèche 23. L'énergie à ultrason ainsi produite va avoir pour effet de faire fondre d'abord l'arête 18 en forme de pointe sur laquelle se concentre toute l'énergie produite par la sonotrode, puis toute la marche biseauté 17 et même de la matière située en-dessous de cette marche, la matière en fusion venant remplir le premier logement 6 de la lunette 1. On interrompt enfin la pression quand le haut 14 de la partie carrure 10 entre en contact avec la lunette 1. A ce moment le joint d'étanchéité 4 est comprimé dans le second logement 7 et l'opération est terminée de laquelle il résulte un assemblage étanche et indémontable. La boîte se présente alors comme représentée en figure 1.

On mentionnera qu'il serait aussi possible d'appliquer la sonotrode sur la lunette, le point d'appui se faisant alors sur le fond-carrure. On parviendrait ainsi à des résultats analogues.

La figure 4 est une représentation en coupe partielle à 12 heures de la montre complètement montée utilisant la boîte qui fait l'objet de l'invention. Cette figure reprend ce qui est montré en figure 1 pour la seule boîte. Disposant de ladite boîte, on commence par monter le mouvement 24 dont un bord extérieur repose sur l'épaulement 12 du fond-carrure 2. On pose ensuite le cadran 25 et les aiguilles 26. On introduit le réhaut 27 dans le pourtour intérieur de la lunette 1. On chasse enfin la glace 28, rendue étanche pan le bandage d'étanchéité 29, sur le réhaut 27. On obtient ainsi une montre à fond-carrure monocoque plastique et habillée d'une lunette métallique, montre présentant un aspect très soigné et une très bonne étanchéité. On fera remarquer qu'à la lunette métallique sera attaché un bracelet selon un mode d'exécution conventionnel et qui n'a pas été représenté au dessin.

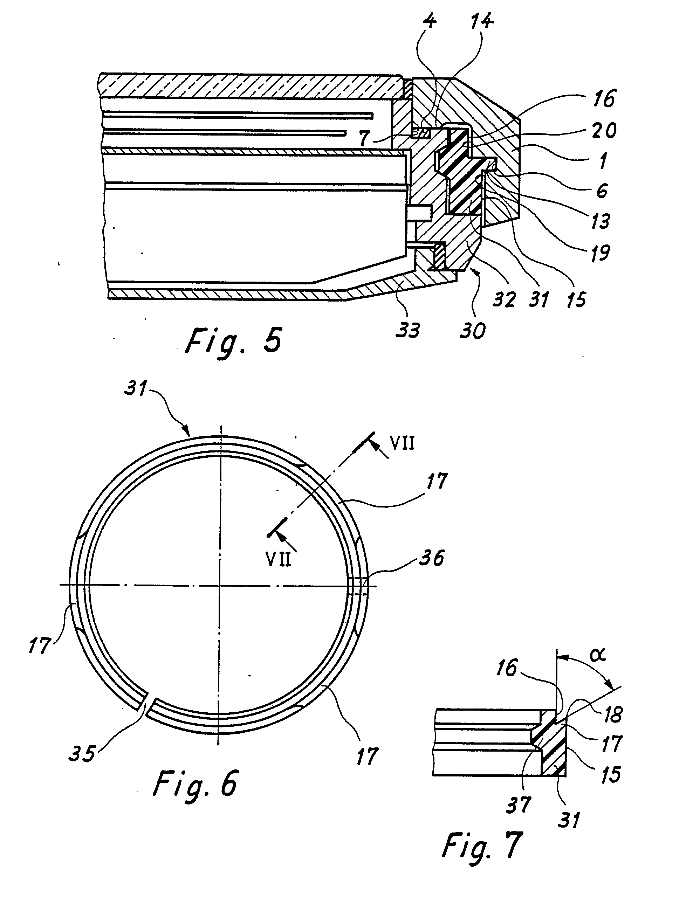

La figure 5 présente une boîte de montre assemblée selon un second mode d'exécution de l'invention. Elle comporte essentiellement une carrure 30 dont au moins une portion périphérique est réalisée en matière plastique. Ici la carrure n'est plus réalisée entièrement en matière plastique mais est composée d'un anneau métallique 32 entouré par un bandage 31 fait en matière plastique. Dans cette construction on voit aussi que le fond 33 de la boîte est indépendant de la carrure et qu'il y est assemblé par un dispositif à cran par exemple.

La figure 5 montre cependant qu'on a affaire, ici aussi, à des moyens d'assemblage similaires à ceux décrits à propos du premier mode d'exécution. On y retrouve en effet le même premier logement annulaire 6 s'étendant radialement dans la lunette 1, la même protubérance annulaire 13 fait d'une pièce avec la portion 31 de la carrure réalisée en matière plastique et le même second logement annulaire 7 dans lequel est logé un joint d'étanchéité 4.

Le bandage 31 est représenté seul aux figures 6 et 7. Il s'agit ici d'un anneau fendu en 35 et qui comporte trois zones ou marches biseautées 17. L'anneau est percé d'untrou 36 par lequel passera la tige de remontoir. Comme on le voit bien en figure 7, qui est une coupe selon la ligne VII-VII de la figure 6, le bandage comporte également un pourtour extérieur en forme d'escalier avec sa première paroi inférieure 15, sa seconde paroi supérieure 16 et sa marche biseautée 17 formant un angle aigu (α) avec la seconde paroi et présentant une arête 18 en forme de pointe. Les première et seconde parois 15 et 16 sont adaptées respectivement pour épouser la forme des premier 19 et second 20 flancs intérieurs de la lunette 1, comme le montre la figure 5. L'assemblage est donc réalisé de la même façon que celui décrit à propos des figures 1 à 4 et selon le même procédé qui utilise des ultrasons. Il n'y a donc pas lieu d'y revenir ici.

Les figures 5 à 7 font comprendre que le bandage 31 est simplement serré autour de l'anneau 32 par le fait de son élasticité. Un bossage trapézoïdal 37, disposé à l'intérieur du bandage 31, coopère avec un logement de même forme pratiqué dans l'anneau 32. La fente 35 du bandage permet d'ouvrir légèrement celui-ci et de le mettre en place sur l'anneau. Ce bandage pourrait cependant être moulé directement sur l'anneau.

Contrairement à ce qui a été dit à propos du premier mode d'exécution, ce second mode présente une réalisation plus classique en ce sens que le mouvement est introduit par le dessous et que le boitier est obturé par un fond vissé ou à cran. La glace repose sur un réhaut qui est fait d'une pièce avec l'anneau 32.

Ce second mode d'exécution est particulièrement intéressant lorsqu'il s'agit d'assembler deux pièces métalliques de natures différentes par exemple de l'acier pour la carrure et du métal dur pour la lunette. On sait en effet que le métal dur (TiN, WC, par exemple) présente des cotes dimensionnelles qui ne peuvent pas être tenues dans des tolérances serrées à l'état brut, ce qui oblige généralement à usiner la pièce en une étape subséquente. Cette étape n'est plus nécessaire si l'on utilise le bandage proposé par l'invention puisque c'est ce bandage qui va s'accommoder de ces tolérances, la carrure étant, elle, suffisamment précise (par décolletage par exemple) pour recevoir le mouvement et le fond.

## Revendications

1. Ensemble destiné à former une boîte de montre comportant une carrure (10, 30) dont au moins une portion périphérique (10, 31) est réalisée en matière plastique, une lunette (1) et un joint d'étanchéité (4), caractérisé par le fait que la portion périphérique réalisée en matière plastique présente un pourtour extérieur en forme d'escalier comportant une première paroi inférieure (15), une seconde paroi supérieure (16) et une marche biseautée (17) formant un angle aigu (α) avec la seconde paroi et présentant une arête (18) en forme de pointe, que la lunette comporte des premier (19) et second (20) flancs intérieurs adaptés respectivement pour épouser la forme des première et seconde parois de la partie carrure, un premier logement (6) étant disposé entre lesdits flancs et contre une face (21) duquel s'appuie ladite arête en forme de pointe quand la carrure est introduite dans la lunette, et que le joint d'étanchéité est disposé à l'intérieur d'un second logement (7) pratiqué dans le haut de la carrure ou dans la partie de la lunette faisant face au haut de la carrure.

2. Ensemble selon la revendication 1, caractérisée par le fait que la carrure (10) est réalisée entièrement en matière plastique conjointement avec le fond (9) pour former un fond-carrure (2) en une seule pièce.

3. Ensemble selon la revendication 1, caractérisée par le fait que la carrure (30) est un anneau métallique (32) entouré par un bandage (31) fait en matière plastique.

4. Procédé d'assemblage d'une boîte de montre utilisant l'ensemble défini selon la revendication 1, caractérisé par le fait qu'il comporte la succession des opérations suivantes:

on introduit la carrure (10, 30) dans la lunette (1) jusqu'à ce que l'arête (18) en forme de pointe présentée par la carrure vienne buter contre la face (21) du premier logement (6) de la lunette,

on exerce sur la carrure ou sur la lunette une pression (23) au moyen d'une sonotrode (22) fournissant des vibrations mécaniques à fréquence élevée pour produire la fusion de la marche biseautée (17), la matière en fusion venant remplir le premier logement de la lunette et

on interrompt la pression quand le haut (14) de la partie carrure entre en contact avec la lunette, le joint d'étanchéité (4) étant alors comprimé dans le second logement (7), la boîte présentant finalement un assemblage indémontable.

## Patentansprüche

1. Baugruppe, bestimmt zum Bilden eines Uhrgehäuses, umfassend einen Gehäusering (10, 30), von dem zumindest ein peripherer Abschnitt (10, 31) aus Kunststoffmaterial hergestellt ist, eine Lünette (1) und ein Dichtungselement (4), dadurch gekennzeichnet, daß der aus Kunststoffmaterial hergestellte periphere Abschnitt einen treppenförmigen Außenumfang mit einer ersten unteren Wandung (15), einer zweiten oberen Wandung (16) und einer abgefasten Stufe (17) aufweist, die mit der zweiten Wandung einen spitzen Winkel (α) bildet und eine spitze Schneide (18) aufweist, daß die Lünette eine erste (19) und eine zweite (20) innere Flanke umfaßt, jeweils ausgebildet zur Anpassung an die Form der ersten bzw. zweiten Wandung der Gehäuseringpartie, wobei eine erste Ausnehmung (6) zwischen den Flanken und gegen eine Stirn (21) vorgesehen ist, an der sich die spitze Schneide abstützt, wenn der Gehäusering in die Lünette eingefügt wird, und daß das Dichtelement im Innern einer zweiten Ausnehmung (7) angeordnet ist, die in die Oberseite des Gehäuserings oder die ihr zugekehrte Partie der Lündette eingearbeitet ist.

2. Baugnuppe nach Anspruch 1, dadurch gekennzeichnet, daß der Gehäusering (10) vollständig aus Kunststoff zusammen mit dem Boden hergestellt ist, um einen einstückigen Boden-Gehäusering (2) zu bilden.

3. Baugruppe nach Anspruch 1, dadurch gekennzeichnet, daß der Gehäusering (30) ein Metallring (32), umschlossen von einer Bandage (31) aus Kunststoffmaterial, ist.

4. Montageverfahren eines Uhrgehäuses unter Verwendung der Baugruppe nach Anspruch 1, dadurch gekennzeichnet, daß es die Abfolge der nachstehenden Arbeitsgänge umfaßt:

man fügt den Gehäusering (10, 30) in die Lünette (1) ein, bis die spitze Schneide (18) des Gehäuserings an der Stirn (21) der ersten Ausnehmung (6) der Lünette zum Anschlag kommt,

man übt auf den Gehäusering oder die Lünette einen Druck (23) mittels einer Sonotrode (22) aus, die mechanische Vibrationen hoher Frequenz liefert zum Aufschmelzen der abgefasten Stufe (17), wobei das schmelzende Material die erste Ausnehmung der Lünette füllt, und

man beendet die Druckausübung, wenn die Oberseite (14) der Gehäuseringpartie in Kontakt mit der Lünette gelangt, wobei dann das Dichtelement (4) in der zweiten Ausnehmung (7) komprimiert wird und das Gehäuse schließlich ein nichtdemontierbares Bauteil darstellt.

**Claims**

1. Set of components for constituting a watch case including a caseband (10, 30), at least a peripheral portion (10, 31) of which is of plastic material, a bezel (1) and a packing (4), characterized by the fact that the peripheral portion of plastic material exhibits a staircase formed outer periphery including a lower first wall (15), an upper second wall (16) and a bevelled step (17) forming an acute angle (α) with the second wall and exhibiting a point formed edge (18), that the bezel includes first (19) and second (20) inner lateral faces respectively adapted to match the form of the first and second walls of the caseband, a first seat (6) being located between said lateral faces and against a surface (21) of which said point formed edge is pressed when the caseband is introduced into the bezel and that the packing is placed within a second seat (7) located in the top of the caseband or in the portion of the bezel facing the upper part of the caseband.

2. Set of components according to claim 1, characterized by the fact that the caseband (10) is entirely of plastic material together with the back (9) so as to form a one piece caseband-back (2).

3. Set of components according to claim 1, characterized by the fact that the caseband (30) is a metallic ring (32) surrounded by a shroud (31) formed of plastic material.

4. Method for assembling a watch case utilizing the set of components as defined according to claim 1, characterized by the fact that it comprises the following steps.

introducing the caseband (10, 30) into the bezel (1) until the point formed edge (18) on the caseband butts against the surface (21) of the first seat (6) of the bezel;

exerting a pressure (23) on the caseband or the bezel by means of a sonic transducer (22) providing mechanical vibrations at high frequency to effect fusion of the bevelled step (17) and filling of the first seat of the bezel with the fused material; and

interrupting the pressure when the top (14) of the caseband comes into contact with the bezel, the packing (4) then being compressed into the second seat (7) and the end result comprising a watch case impossible to disassemble.

Fig.1

Fig.2

Fig.3

Fig.4

Fig. 5

Fig. 6

Fig. 7